# EUROPÄISCHE PATENTSCHRIFT

(11) **EP 4 141 266 B1**
(45) Veröffentlichungstag und Bekanntmachung des Hinweises auf die Patenterteilung: **25.09.2024**
(21) Anmeldenummer: 22191959.0
(22) Anmeldetag: 24.08.2022
(51) Int. Cl.: F16B 2/12, F16B 5/10, H02G 3/12

(54) **BAUTEIL, INSBESONDERE FÜR EIN FAHRZEUG**
COMPONENT, IN PARTICULAR FOR A VEHICLE
COMPOSANT, EN PARTICULIER POUR UN VÉHICULE

(30) Priorität: 27.08.2021 DE 102021122283
(43) Veröffentlichungstag der Anmeldung: 01.03.2023
(73) Patentinhaber: Reich GmbH Regel- und Sicherheitstechnik, 35713 Eschenburg-Wissenbach (DE)
(72) Erfinder: ROELVINK, Hans, 3016 AJ Rotterdam (NL); BENDER, Steffen, 35713 Eschenburg (DE)
(74) Vertreter: Hofstetter, Schurack & Partner

(56) Entgegenhaltungen:
- DE-A1- 102005 004 005
- DE-A1- 2 526 890
- US-B1- 7 087 837

## Beschreibung

Die Erfindung betrifft ein Bauteil, insbesondere für ein Fahrzeug, gemäß dem Oberbegriff des Patentanspruchs 1.

Allgemein ist es bereits bekannt, ein Bauteil in einer Aussparung einer Wand mittels einer Spanneinrichtung festzulegen, welche wenigstens eine Spannpratze umfasst, welche an einem an dem Bauteil gelagerten, um eine Drehachse drehbaren Gewindeelement gehalten ist und entlang von diesem in eine Spannstellung verlagerbar ist, in welcher die Spannpratze den Wandbereich hintergreift, wodurch das Bauteil am Wandbereich verspannt festgelegt ist.

Aus der DE 10 2005 004 005 A1 ist bereits eine Hohlwanddose für elektrotechnische Zwecke offenbart, die zur Montage in einer Hohlwand von vorn in einen Durchbruch der Wand einsetzbar ist. Die Einstecklage der Dose in der Montagesolllage ist durch an der Wand angreifende Anschläge und/oder Befestigungselemente gesichert ist, wobei jedes Befestigungselement aus einer Lasche und einer die Lasche gewindemäßig durchgreifenden Schraube besteht. Die Lasche ist mittels der Schraube verstellbar sowie mindestens mittelbar ein- und ausschwenkbar. Hierbei ist an der Dose ein Halter angeordnet, in welchem die Lasche in einer Vormontagelage gehalten ist. Die Lasche ist mittels der Schraube von dem Halter lösbar, wenn die Schraube zum Zwecke der Montage der Dose betätigt wird. Die Lasche ist auch mittels der Schraube mit dem Halter koppelbar, wenn die Schraube zum Zwecke der Demontage der Dose betätigt wird.

Aus der DE 25 26 890 C2 ist ebenfalls eine elektrische Hohlwanddose offenbart, die von vorn in den Durchbruch einer Wand einsetzbar ist und einerseits einen Abstützflansch und andererseits seitlich angeordnete, durch Schrauben verstellbare sowie ein- und ausschwenkbare Halteglieder aufweist.

Aus der US 7 087 837 B1 ist noch eine Baugruppe offenbart, die eine einfache Montage eines elektrischen Kastens an einer unfertigen Wand mit einem gewünschten Versatz zur späteren Oberfläche der Wand ermöglicht.

Aufgabe der vorliegenden Erfindung ist es, ein Bauteil der eingangs genannten Art zu schaffen, welches auf besonders einfache und zuverlässige Weise an einem entsprechenden Wandbereich festlegbar ist.

Diese Aufgabe wird erfindungsgemäß durch ein Bauteil mit den Merkmalen des Patentanspruchs 1 gelöst. Vorteilhafte Ausgestaltungen mit günstigen Weiterbildungen der Erfindung sind Gegenstand der abhängigen Ansprüche.

Das erfindungsgemäße Bauteil umfasst zum Festlegen an einem Wandbereich einer entsprechenden Wand, insbesondere eines Fahrzeugs, eine Spanneinrichtung, welche wenigstens eine Spannpratze aufweist. Diese Spannpratze ist an einem an dem Bauteil gelagerten, um eine Drehachse drehbaren Gewindeelement gehalten und entlang von diesem durch Drehen des Gewindeelements in eine Spannstellung bringbar, in welcher die Spannpratze den entsprechenden Wandbereich hintergreift und somit das Bauteil verspannt am Wandbereich festlegt.

Um dabei eine besonders einfache und zuverlässige Festlegung und Handhabung des Bauteils zu ermöglichen, ist erfindungsgemäß an dem Bauteil eine Führung angeordnet, entlang welcher die Spannpratze zwischen einer Zwischenstellung und der das Bauteil festlegenden Spannstellung durch Drehen des Gewindeelements verstellbar ist, sowie eine Aufnahme, in welche die Spannpratze durch Drehen des Gewindeelements in Richtung von der Spannstellung zur Zwischenstellung und über diese hinaus aus der Führung herausgelangt, indem die Spannpratze im Weiteren reibungsbedingt mit dem Gewindeelement bis in ihre Ablagestellung mit dreht. Demzufolge ist erfindungsgemäß eine entsprechende Führung vorgesehen, welche für eine zuverlässige Verlagerung der Spannpratze zwischen der Spannstellung und einer Zwischenstellung beziehungsweise andersherum zwischen der Zwischenstellung und der Spannstellung sorgt, wenn das Gewindeelement verdreht und hierdurch die Spannpratze mitbewegt wird. Außerdem ist erfindungsgemäß die entsprechende Aufnahme vorgesehen, in welcher die Spannpratze in ihrer Ablagestellung abgelegt werden kann, sobald diese ausgehend von der Spannstellung in Richtung der Zwischenstellung über diese hinaus aus der Führung verlagert und im Weiteren reibungsbedingt in Folge der Drehung des Gewindeelements mitgedreht wird, bis sie die Ablagestellung erreicht. In dieser Ablagestellung ist die Spannpratze vorzugsweise sicher aufgenommen, sodass beispielsweise ein Ein- oder Ausbau des Bauteils in oder aus einer entsprechenden Aussparung innerhalb einer Wand, insbesondere eines Fahrzeugs, erfolgen kann. Dies ermöglicht eine besonders einfache Montage und Demontage des Bauteils.

Umgekehrt wird bei der Montage die Spannpratze zunächst aus ihrer Ablagestellung bei entsprechender Drehung des Gewindeelements reibungsbedingt mitgedreht, bis diese in die Führung und somit in die Zwischenstellung gelangt, von welcher aus die Spannpratze entlang der Führung bis in die Spannstellung bewegt werden kann, in welcher das Bauteil sicher am korrespondierenden Wandbereich der entsprechenden Wand, beispielsweise des Fahrzeugs, fixiert ist.

Insgesamt ist somit eine Spanneinrichtung geschaffen, bei welcher auf besonders einfache und zuverlässige, reproduzierbare Weise das Bauteil am Wandbereich der entsprechenden Wand, beispielsweise des Fahrzeugs, festgelegt und auch wieder gelöst werden kann.

Das vorliegende Bauteil ist insbesondere zur Anordnung an einer Wand eines Fahrzeugs in Form eines Reisemobils oder eines Campervans beziehungsweise Wohnwagens vorgesehen. Natürlich können auch andere mobile Unterkünfte oder andersartige Fahrzeuge mit der Klappeneinrichtung ausgestattet werden. Gegenebenfalls ist das Bauteil auch für die Anwendung bei Wänden anderer Einrichtungen wie Bauwerke oder dergleichen denkbar. Insbesondere können hierdurch Anschlusselemente an einer Wand des Fahrzeugs angeordnet werden, über welche ein Medium, ein Signal oder elektrische Energie einer Komponente des Fahrzeugs zugeführt oder von dieser Abgeführt wird. Beispielsweise kann das Anschlusselement ein Anschlussstutzen für Wasser, Gas, einen anderen Brennstoff oder dergleichen sein. Ebenso kann dieser als Anschluss für ein Satellitensignal oder als USB-Anschluss ausgebildet sein. Auch kann das Anschlusselement zum Abführen von Abwasser oder dergleichen ausgebildet sein.

Es ist erfindungsgemäß vorgesehen, dass ein Gewinde des Gewindeelements in einem Abstand vor dem Ende eines Schafts des Gewindeelements endet. Dies bedeutet, dass der das Gewinde tragende Schaft des Gewindeelements in einem Endbereich entsprechend gewindelos ausgestaltet ist. Dies hat beispielsweise den Vorteil, dass die Spannpratze nicht bis zum Ende des Schafts beziehungsweise des Gewindeelements gedreht werden kann und im Extremfall das Bauteil, an welchem das Gewindeelement gelagert, beschädigen kann, sondern dass vielmehr eine Verlagerung der Spannpratze bis lediglich zum Ende des Gewindes möglich ist.

Zudem ist ein Federelement vorgesehen, mittels welchem erfindungsgemäß die Spannpratze gegen das Ende des Gewindes des Gewindeelements gedrückt wird, wenn die Spannpratze durch entsprechendes Drehen des Gewindeelements bis ans Ende des Gewindes gelangt ist. Bei einer gegenläufigen Drehung des Gewindeelements sorgt somit das Federelement dafür, dass die Spannpratze mit deren Gewinde wieder ordnungsgemäß mit dem Gewinde des Gewindeelements in Eingriff kommt und so aus der Zwischenstellung entlang des Gewindeelements beispielsweise in die Spannstellung verlagert werden kann. Durch das Federelement wird somit zuverlässig sichergestellt, dass die Spannpratze nach Erreichen des Endes des Gewindes bei einer entsprechend gegenläufigen Drehung wieder mit dem Gewinde in Eingriff kommt und demzufolge wieder seine ordnungsgemäße Funktion zur Halterung des Bauteils am entsprechenden Wandbereich der Wand, beispielsweise des Fahrzeugs, erzielen kann.

In weiterer Ausgestaltung der Erfindung hat es sich dabei als vorteilhaft gezeigt, wenn die Aufnahme als Vertiefung in einem Wandbereich des Bauteils ausgebildet ist, in welcher die Spannpratze in ihrer Ablagestellung gegenüber einer Außenseite des Wandbereichs zurückspringend angeordnet ist. Somit kann das Bauteil besonders günstig in einer entsprechenden Aussparung einer Wand, beispielsweise eines Fahrzeugs, fixiert werden, wonach durch entsprechende Verlagerung der Spannpratze aus der Ablagestellung über die Zwischenstellung in die Spannstellung die gewünschte Fixierung des Bauteils am entsprechenden Wandbereich der Wand, beispielsweise des Fahrzeugs, erreicht werden kann. Die verborgende Anordnung der Spannpratze in der Ablagestellung bewirkt demzufolge eine besonders einfache Montage und darüber hinaus eine zuverlässige Anordnung beispielsweise beim Transport des Bauteils.

Eine weitere vorteilhafte Ausführungsform der Erfindung sieht vor, dass das Ende des Gewindes des Gewindeelements ein Führungselement der Führung der Spannpratze überragt. Somit gelangt bei entsprechender Drehung des Gewindeelements die Spannpratze aus der Führung heraus, um im weiteren Verlauf der Drehbewegung in ihre Ablagestellung verlagert werden zu können. Hierdurch ergibt sich durch die Verhältnismäßigkeit der Länge des Gewindes zur Länge des Führungselements der Führung eine zwangsläufige Abfolge der Überlagerungsbewegung der Spannpratze aus deren Spannstellung in die Zwischenstellung, über die sie hinaus aus der Führung heraus und anschließend in die Ablagestellung, beziehungsweise umgekehrt, aus der Ablagestellung zunächst in die Führung hinein und dann ausgehend aus der von der Zwischenstellung in die Spannstellung bewegt werden kann.

Eine weitere vorteilhafte Ausführungsform der Erfindung sieht vor, dass das Federelement einstückig mit dem Basiselement des Bauteils ausgebildet ist. Hierdurch ergibt sich eine besonders einfache Gestaltung des Federelements. Hierbei ist es insbesondere vorteilhaft, wenn das Basiselement des Bauteils und somit auch das Federelement aus einem geeigneten Kunststoff hergestellt ist. Dies ermöglicht eine besonders einfache Gestaltung sowohl des Basiselements als auch des Federelements. Gleichwohl sind auch andere Gestaltungen denkbar, wie beispielsweise aus einem entsprechenden Metall beziehungsweise Blechwerkstoff.

Eine weitere vorteilhafte Ausführungsform der Erfindung sieht vor, dass die Spannpratze zwischen der Ablagestellung und der Zwischenstellung mittels des Gewindeelements um etwa 90° verdrehbar ist. Durch eine derartige Verdrehbarkeit um eine Vierteldrehung kann besonders zuverlässig einerseits die gewünschte Ablagestellung und andererseits die gewünschte Spannstellung der Spannpratze verwirklicht werden.

Eine weitere vorteilhafte Ausführungsform der Erfindung sieht vor, dass die Spannpratze ein Führungsmittel aufweist, welches mit einem Führungsmittel der Führung des Bauteils formschlüssig zusammenwirkt. Somit ergibt sich eine besonders zuverlässige und gleichmäßige Verlagerungsbewegung der Spannpratze entlang der Führung zwischen der Zwischenstellung und der Spannstellung. Außerdem ergibt sich ein besonders günstiges Einfädeln und Ausfädeln der Spannpratze in die Führung hinein beziehungsweise aus dieser heraus, wenn die Spannpratze in die Ablagestellung verlagert wird beziehungsweise aus dieser heraus gelangt, um mit der Führung in Eingriff zu gelangen.

Eine weitere vorteilhafte Ausführungsform sieht vor, dass das Bauteil eine Lagereinrichtung aufweist, an welcher das Gewindeelement im Bereich seiner jeweiligen Enden drehbar gelagert ist. Hierdurch ergibt sich eine besonders stabile Lagerung des Gewindeelements, wodurch sich eine besonders betriebssichere Verlagerung der Spannpratze realisieren lässt.

Schließlich hat es sich als vorteilhaft gezeigt, wenn das Bauteil einer Klappeneinrichtung zugeordnet ist mit einem Basiselement, durch welches wenigstens eine Öffnung begrenzt ist, und mit einer Klappe, welche zwischen wenigstens einer zumindest einen Teilbereich der Öffnung überdeckenden und dadurch verschließenden Schließstellung und wenigstens einer den Teilbereich freigebenden Offenstellung relativ zu dem Basiselement bewegbar an diesem gehalten ist. Durch das in den entsprechenden Wandbereich der Wand, beispielsweise des Fahrzeugs, eingesetzte Basiselement beziehungsweise Bauteil kann somit auf einfache Weise eine durch die Klappe verschließbare Durchgangsöffnung, eine Mulde oder eine andersartig verschließbare Öffnung, Vertiefung oder dergleichen geschaffen werden, welche universell, beispielsweise an einem Fahrzeug, genutzt werden kann.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:

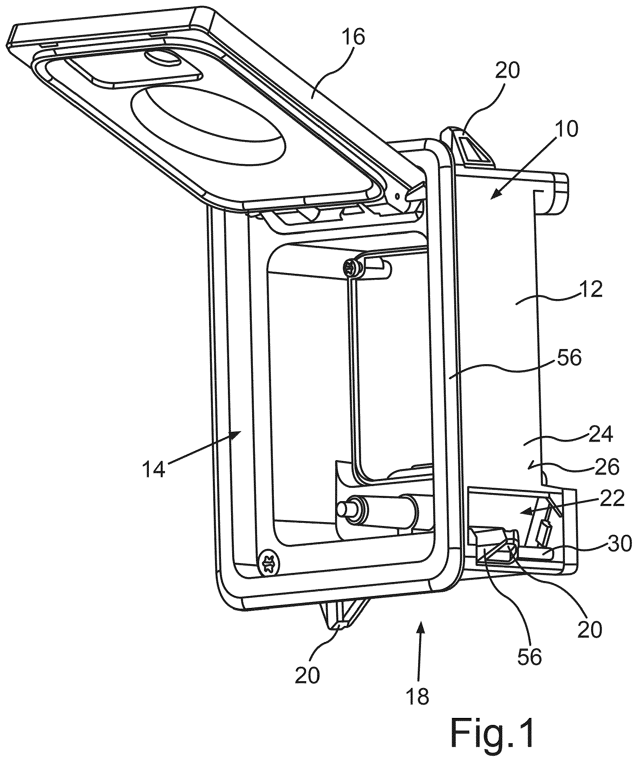

- Fig. 1: eine Perspektivansicht auf ein in einem Wandbereich einer Wand eines Fahrzeugs einsetzbares Bauteil in Form einer Klappeneinrichtung mit einem einen Rahmen aufweisenden Basiselement, durch welches eine Öffnung begrenzt ist, die mit einer zwischen einer Schließstellung und einer Offenstellung verlagerbaren Klappe verschließbar ist, wobei das Basiselement des Bauteils mittels einer Spanneinrichtung in der Aussparung der Wand des Fahrzeugs befestigbar ist, welche vorliegend vier Spannpratzen gemäß der Erfindung aufweist;

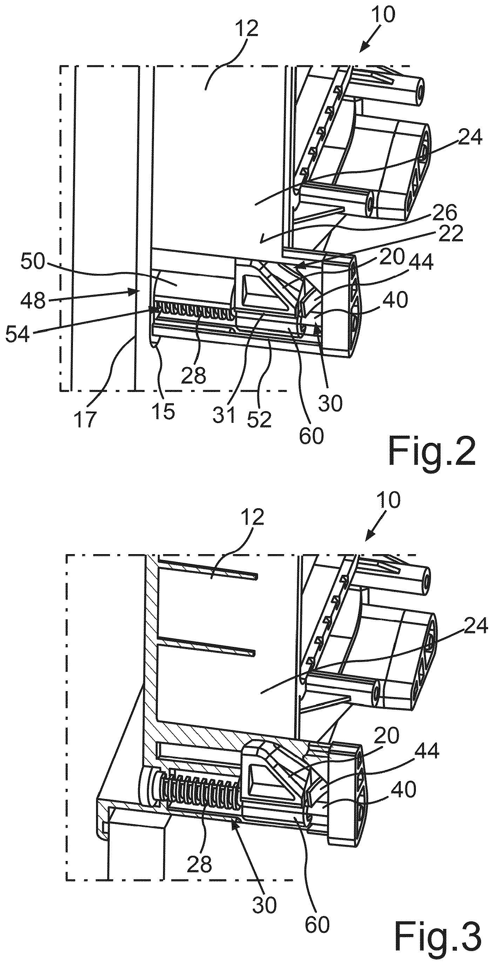

- Fig. 2: eine ausschnittsweise Perspektivansicht auf eine der Spannpratzen der Spanneinrichtung des Bauteils, welche sich vorliegend in einer Ablagestellung befindet;
- Fig. 3: eine weitere ausschnittsweise Perspektivansicht auf die Spannpratze gemäß Fig. 2, welche an einem Gewinde eines drehbaren Gewindeelements gehalten ist und durch entsprechende Drehung des Gewindeelements reibungsbedingt aus der in Fig. 2 gezeigten Ablagestellung um einen Winkelbetrag herausgedreht ist;

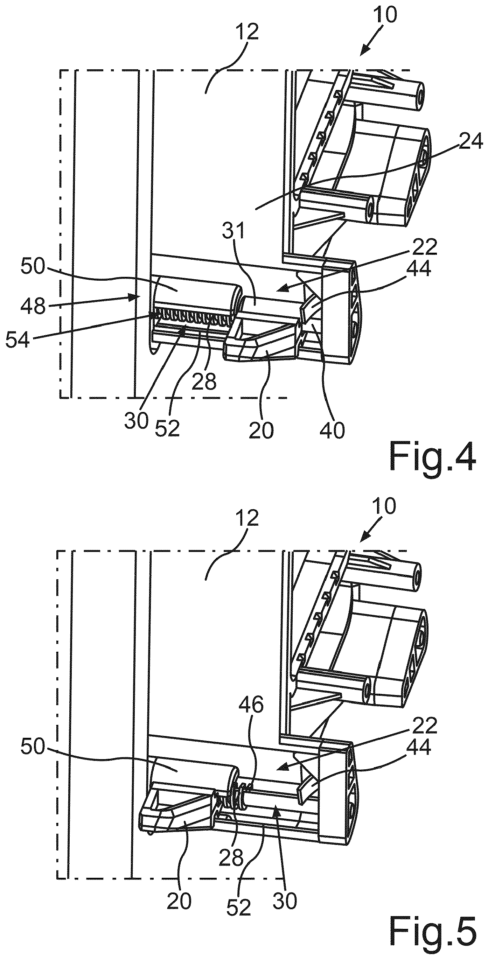

- Fig. 4: eine weitere ausschnittsweise Perspektivansicht auf die Spannpratze gemäß Fig. 2 und 3, welche im weiteren Verlauf der Drehbewegung des Gewindeelements in eine um 90° gegenüber der Ablagestellung verlagerte Stellung gebracht ist, in welcher die Spannpratze mit einer Führung am Bauteil in Eingriff kommt;
- Fig. 5: eine weitere ausschnittsweise Perspektivansicht auf die Spannpratze gemäß Fig. 2 bis 4, wobei die Spannpratze im weiteren Verlauf der Drehbewegung des Gewindeelements aus der Zwischenstellung gemäß Fig. 4 in eine Spannstellung gemäß Fig. 5 verlagert worden ist, in welcher das Bauteil mittels der Spannpratze sowie mittels eines am Rahmen des Basiselements des Bauteils umlaufenden Kragens in einer entsprechenden Aussparung einer Wand des Fahrzeugs spannend beziehungsweise klemmend festgelegt ist;

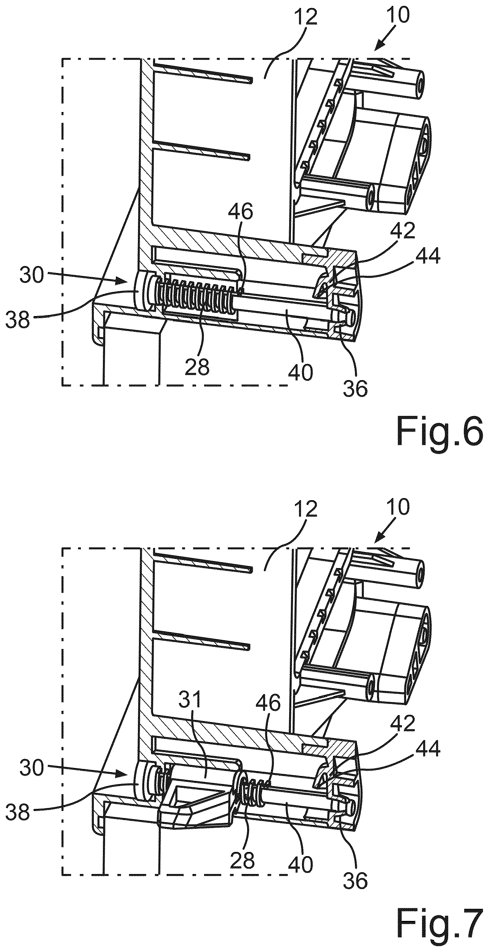

- Fig. 6: eine weitere Perspektivansicht auf das Bauteil gemäß den Fig. 2 bis 5 bei weggelassener Spannpratze, wobei das Gewindeelement zum Verlagern der Spannpratze verdeutlicht ist; und
- Fig. 7: eine Perspektivansicht auf das Bauteil analog zu Fig. 6 mit an dem Gewindeelement angeordneter Spannpratze.

Fig. 1 zeigt in einer Perspektivansicht ein Bauteil 10 in Form eines Basiselements, welches einer Klappeneinrichtung zugeordnet ist. Dieses Basiselement beziehungsweise Bauteil 10 umfasst im Wesentlichen einen rechteckförmigen Rahmen 12, durch welchen wenigstens eine Öffnung 14 begrenzt ist, welche mit einer Klappe 16 in ihrer hier nicht gezeigten Schließstellung verschließbar ist. Aus dieser Schließstellung, in welcher die Klappe 16 die Öffnung 14 des Bauteils 10 vollständig verschließt, ist diese in eine hier gezeigte Offenstellung denkbar, in welcher die Klappe 16 mittels eines nicht erkennbaren Federelements gehalten ist.

Damit das Bauteil 10 beziehungsweise dessen Rahmen 12 in einer rechteckförmigen Aussparung einer Wand, beispielsweise eines Fahrzeugs, befestigbar ist, welche im Querschnitt an den Außenumfang des Rahmens 12 angepasst ist, ist im vorliegenden Fall eine Spanneinrichtung 18 vorgesehen, welche vorliegend vier Spannpratzen 20 umfasst, welche verteilt am Außenumfang des Rahmens 12 angeordnet sind. Eine dieser im Wesentlichen gleich ausgebildeten Spannpratzen 20 ist im Weiteren in den Fig. 2 bis 7 in einer jeweiligen ausschnittsweisen Perspektivansicht näher beschrieben.

Gemäß Fig. 2 ist dabei die Spannpratze 20 vorliegend in einer Ablagestellung gezeigt, in welcher diese innerhalb einer Aufnahme 22 angeordnet ist, welche vorliegend als Vertiefung in einem Wandbereich 24 des Rahmens 12 des Bauteils 10 ausgebildet ist. Die Aufnahme 22 beziehungsweise die Vertiefung ist dabei so dimensioniert, dass die Spannpratze 20 in ihrer Ablagestellung gegenüber einer Außenseite 26 des Wandbereichs 24 zurückspringend oder zumindest bündig angeordnet ist. Hierdurch wird erreicht, dass das Bauteil 10 bei sich in der Ablagestellung befindenden Spannpratzen 20 in die korrespondierende Aussparung 15 eines entsprechenden Wandbereichs 17, beispielsweise eines Fahrzeugs, eingesetzt werden kann, ohne dass hierbei die Spannpratze 20 mit dem Randbereich, welcher die Aussparung 15 den Wandbereich 17 begrenzt, kollidiert. Dies wird insbesondere aus Fig. 2 deutlich.

Weiterhin ist aus Fig. 2 sowie in den weiteren Fig. 3 bis 7 erkennbar, dass die Spannpratze 20 entlang eines Gewindeelements 30 verlagerbar ist und demzufolge eine Gewindehülse 31 aufweist, welche ein mit einem Gewinde 28 des Gewindeelements 30 zusammenwirkendes Innengewinde hat.

Insbesondere aus Fig. 3 sowie den Fig. 6 und 7 ist überdies erkennbar, dass dieses Gewindeelement 30 mittels einer Lagereinrichtung des Bauteils 10 drehbar gelagert gehalten ist. Hierzu weist das Bauteil 10 einen umlaufenden Ringsteg 32 auf, an welchem ein gewindefreier Abschnitt 34 eines Schafts 40 des Gewindeelements 30, welcher sich an einen Kopf 38 des Gewindeelements 30 anschließt, außenumfangsseitig gelagert ist. An den Abschnitt 34 schließt sich auf der kopfabgewandten Seite das Gewinde 28 des Gewindeelements 30 an.

Am gegenüberliegenden freien Ende des Schafts 40 ist das Gewindeelement 30 ebenfalls in einer außenumfangsseitig umlaufenden Gewindeelementaufnahme bzw. Aufnahme 36 gelagert.

Innerhalb des Kopfs 38 des Gewindeelements 30 ist ein Werkzeugangriff, beispielsweise ein Innensechskant, vorgesehen, sodass das Gewindeelement 30 um seine Längsmittelachse in beide Richtungen, also sowohl im Uhrzeigersinn als auch im Gegenuhrzeigersinn, drehbar ist.

Insbesondere aus den Fig. 6 und 7 ist außerdem erkennbar, dass sich das Gewinde 28 des Gewindeelements 30 ausgehend vom Abschnitt 34 lediglich über eine Teillänge des Gewindeelements 30 erstreckt und demzufolge in einem Abstand vor dem freien Ende des Gewindeelements 30 endet. Befindet sich hierbei die Spannpratze 20 in ihrer Ablagestellung gemäß Fig. 2, so ist die Spannpratze 20 zumindest im Wesentlichen außer Eingriff mit den Gewinde 28 und ist demzufolge lediglich reibschlüssig mit dem Schaft 40 des Gewindeelements 30 verbunden.

Damit sichergestellt ist, dass die Spannpratze 20 beziehungsweise deren Innengewinde mit dem Gewinde 28 des Gewindeelements 30 in Eingriff kommen kann, ist im Bereich des freien Endes des Gewindeelements 30 an einer Wand 42, durch welche auch die Aufnahme 36 für das freie Ende des Gewindeelements 30 gebildet ist, ein Federelement 44 einstückig angeordnet, welches wie die Wand 42 und das zumindest im Wesentlichen gesamte Bauteil 10 vorliegend aus einem entsprechend elastischen Kunststoff gebildet ist. Dies bedeutet, dass das Federelement 44 in Folge der Materialeigenschaften des Kunststoffs eine zumindest leichte, elastische Eigenschaft aufweist, um die Spannpratze 20 mit ihrem Innengewinde gegen das Ende 46 des Gewindes 28 des Gewindeelements 30 zu drücken. Wird demzufolge das vorliegend ein Rechtsgewinde aufweisende Gewindeelement 30 entgegen dem Uhrzeigersinn gedreht, so wandert die Spannpratze 20 in Richtung zum Ende 46 des Gewindes 28 bis dieses in Folge der Drehungen im Gegenuhrzeigersinn außer Eingriff kommt mit dem Innengewinde der Spannpratze 20.

Durch das Federelement 44 wird jedoch sichergestellt, dass die Spannpratze 20 im Bereich ihres Innengewindes auch weiterhin gegen das Ende 46 des Außengewindes des Gewindeelements 30 gedrückt wird, auch wenn dieses in Folge der Drehung des Gewindeelements 30 im Gegenuhrzeigersinn außer Eingriff gekommen ist. Wird umgekehrt das Gewindeelement 30 mit dem vorliegend vorgesehenen Rechtsgewinde im Uhrzeigersinn gedreht, so kommen das Gewinde 28 und das Innengewinde der Spannpratze 20 wieder dadurch miteinander in Eingriff, dass das Federelement 44 dafür sorgt, dass die Spannpratze 20 gegen das Ende 46 des Gewindes 28 gedrückt wird. Umgekehrt wird durch die verkürzte Ausgestaltung des Gewindes 28 sichergestellt, dass mittels des Gewindeelements 30 die Spannpratze 20 nicht unbegrenzt in Richtung des Endes des Gewindeelements 30 bewegt werden kann, bis dieses beispielsweise das Bauteil 10 im Bereich der Aufnahme 36 für das freie Ende des Gewindeelements 30 beschädigt.

Wie nun des Weiteren aus Fig. 3 erkennbar ist, bewirkt ein Drehen des Gewindeelements im Uhrzeigersinn, dass das sich ausschließlich auf dem gewindefreien Schaft 40 befindende Spannpratze 20 aus der Ablagestellung gemäß Fig. 2 in Folge der Reibung zwischen der Gewindehülse 31 der Spannpratze 20 und dem Schaft 40 zunächst einhergehend mit der Drehung des Gewindeelements 30 um einen entsprechenden Winkelbetrag mitverdreht wird.

In Zusammenschau mit Fig. 4 ist hierbei erkennbar, dass die Spannpratze 20 bei einer entsprechenden Drehung des Gewindeelements 30 im Uhrzeigersinn soweit aus der Ablagestellung mitverdreht wird, bis gemäß Fig. 4 in eine etwa 90 Grad dazu verdrehte Stellung gelangt. In dieser Stellung gelangt die Spannpratze 20 auf im Weiteren noch näher beschriebene Weise in Eingriff mit einer Führung 48 des Bauteils 10, welche einerseits durch ein im Querschnitt etwa ringsegmentförmiges Führungselement 50 und andererseits durch einen Führungssteg 52 gebildet ist, zwischen welchen eine nutartige Aussparung 54 verbleibt. Innerhalb dieser Aussparung 54 kann die in ihrer Breite darauf abgestimmte Spannpratze 20 entlang des Gewindeelements 30 bewegt werden.

Sobald die Spannpratze gemäß Fig. 4 die gegenüber der Ablagestellung um 90 Grad gedrehte Stellung erreicht hat, kommt das Innengewinde der Spannpratze 20 mit dem Gewinde 28 des Gewindeelements 30 bei entsprechender Drehung im Uhrzeigersinn in Eingriff und bewirkt, dass die Spannpratze 20 in Eingriff mit der Führung 48 kommt. In diesem Moment ist eine entsprechende Zwischenstellung erreicht. Bei einer weiteren Drehung des Gewindeelements 30 im Uhrzeigersinn bewegt sich demzufolge die Spannpratze 20 in Folge des Zusammenwirkens des Gewindes 28 mit dem Innengewinde der Spannpratze 20 in Richtung auf einen umlaufenden Rand 56 des Bauteils 10 zu. Zwischen diesem Rand 56 und einer Spannseite 58 der Spannpratze 20 ist ein entsprechender Wandbereich der Wand 17 festklemmbar, welcher die das Bauteil 10 aufnehmende Aussparung 15 begrenzt. Mit anderen Worten kann durch entsprechendes Drehen des Gewindeelements 30 und damit einem entsprechenden Verlagern der Spannpratze 20 auf den Rand 56 zu der entsprechende Wandbereich 17, an welchem das Bauteil 10 festgelegt werden soll, zwischen der Spannseite 58 der Spannpratze 20 und dem Rand 56 des Bauteils 10 eingeklemmt werden.

Um dabei eine besonders günstige Führung der Spannpratze 20 zu erreichen, ist in diese eine beispielsweise in den Fig. 2 und 3 erkennbare Nut 60 als Führungsmittel eingebracht, welche sich in Erstreckungsrichtung des Gewindeelements 30 und somit in Verlagerungsrichtung der Spannpratze 20 erstreckt. Beim Verlagern der Spannpratze 20 aus der Ablagestellung gemäß Fig. 2 in die Zwischenstellung gemäß Fig. 4 kommt demzufolge die Nut 60 als Führungsmittel auf Seiten der Spannpratze 20 mit dem Führungssteg 52 als Führungsmittel auf Seiten des Bauteils 10 beziehungsweise auf Seiten der Führung 48 in formschlüssigen Eingriff, sodass die Spannpratze 20 nicht nur zwischen dem Führungselement 50 und Führungssteg 52 geführt ist, sondern zusätzlich formschlüssig durch die Nut 60, welche mit dem Führungssteg 52 zusammenwirkt, geführt ist.

Außerdem ist erkennbar, dass das Führungselement 50 kürzer ausgebildet ist als das Gewinde 28 des Gewindeelements 30: oder mit anderen Worten gesagt ist das Ende des Gewindes 28 des Gewindeelements 30 gegenüber dem Führungselement 50 der Führung 48 überragend ausgebildet. Dies bewirkt, dass beim Bewegen der Spannpratze 20 aus der Spannstellung gemäß Fig. 5 in die Zwischenstellung gemäß Fig. 4 die Spannpratze 20 zunächst außer Eingriff mit der Führung 48 kommt, bevor das Ende des Gewindes 28 des Gewindeelements 30 erreicht ist. Ist das Ende des Gewindeelements 30 erreicht, so kommt die Spannpratze 20 in Anlage mit dem Federelement 44, was wiederum bewirkt, dass die Spannpratze 20 sicher gegen das Ende 46 des Gewindes 28 gedrückt ist. Gleichzeitig ist die Gewindehülse 31 der Spannpratze 20 entsprechend reibschlüssig mit dem Schaft 40 des Gewindeelements 30 verbunden, sodass eine weitere Drehung des Gewindeelements 30 im Gegenuhrzeigersinn bewirkt, dass die Spannpratze 20 aus der Zwischenstellung gemäß Fig. 4 in die Ablagestellung gemäß Fig. 2 um 90 Grad reibungsbedingt mitverdreht wird.

Insgesamt ist somit erkennbar, dass vorliegend eine Spanneinrichtung 18 geschaffen ist, bei welcher je nach Drehung des Gewindeelements 30, zunächst im Uhrzeigersinn, die Spannpratze 20 aus der Ablagestellung gemäß Fig. 2 zunächst um 90 Grad reibungsbedingt in Folge der Drehung des Gewindeelements 30 um 90 Grad mitverlagert wird, bis dieses die Zwischenstellung gemäß Fig. 4 erreicht, wonach die Spannpratze 20 und deren Innengewinde mit dem Gewinde 28 des Gewindeelements 30 in Eingriff kommt und außerdem in Eingriff mit der Führung 48 kommt, entlang welcher die Spannpratze 20 im weiteren Verlauf der Drehung des Gewindeelements 30 im Uhrzeigersinn aus der Zwischenstellung in die Spannstellung gemäß Fig. 5 gelangt, in welcher ein entsprechender Wandbereich einer Wand 17, an welcher das Bauteil 10 befestigt werden soll, zwischen der Spannseite 58 und dem Rand 56 eingeklemmt wird.

Bei einer entsprechenden Lösung der Spannpratze 20, beispielsweise zur Demontage des Bauteils 10, muss demzufolge das Gewindeelement 30 im Gegenuhrzeigersinn bewegt werden, wodurch dieses zunächst aus der Spannstellung gemäß Fig. 5 in die Zwischenstellung gemäß Fig. 4 gelangt, in welcher die Spannpratze 20 zunächst außer Eingriff mit der Führung 48 und außer Eingriff mit dem Gewinde 28 des Gewindeelements 30 kommt, wonach im weiteren Verlauf der Drehbewegung des Gewindeelements 30 im Gegenuhrzeigersinn die Spannpratze 20 reibungsbedingt in ihrem Sitz auf dem Schaft 40 um 90 Grad in die Ablagestellung gemäß Fig. 2 verlagert wird.

### NEUE BEZUGSZEICHENLISTE:

- 10: Bauteil
- 12: Rahmen
- 14: Öffnung
- 15: Aufsparung
- 16: Klappe
- 17: Wandbereich
- 18: Spanneinrichtung
- 20: Spannpratze
- 22: Aufnahme
- 24: Wandbereich
- 26: Außenseite
- 28: Gewinde
- 30: Gewindeelement
- 31: Gewindehülse
- 32: Ringsteg
- 34: Abschnitt
- 36: Aufnahme
- 38: Kopf
- 40: Schaft
- 42: Wand
- 44: Federelement
- 46: Ende
- 48: Führung
- 50: Führungselement
- 52: Führungssteg
- 54: Aussparung
- 56: Rand
- 58: Spannseite
- 60: Nut

## Patentansprüche

1. Bauteil (10) insbesondere für ein Fahrzeug, welches zum Festlegen des Bauteils (10) an einem Wandbereich (17) des Fahrzeugs eine Spanneinrichtung (18) umfasst mit wenigstens einer Spannpratze (20), welche an einem an dem Bauteil (10) gelagerten, um eine Drehachse drehbaren Gewindeelement (30) gehalten ist und entlang von diesem in eine Spannstellung verlagerbar ist, in welcher die Spannpratze (20) den Wandbereich (17) hintergreift und das Bauteil (10) am Wandbereich (17) festlegt, wobei eine an dem Bauteil (10) angeordnete Führung (48), entlang welcher die Spannpratze (20) zwischen einer Zwischenstellung und der Spannstellung durch Drehen des Gewindeelements (30) versstellbar ist und eine an dem Bauteil (10) angeordnete Aufnahme (36), in welche die Spannprazte (20) durch Drehen des Gewindeelements (30) in Richtung von der Spannstellung zur Zwischenstellung und über diese hinaus aus der Führung (48) heraus gelangt, indem die Spannprazte (20) im Weiteren reibungsbedingt mit dem Gewindeelement (30) bis in ihre Ablagestellung mitdreht,
**dadurch gekennzeichnet, dass**
ein Gewinde (28) des Gewindeelements (30) in einem Abstand vor dem Ende eines Schafts (40) des Gewindeelements (30) endet und die Spannpratze (20) mittels eines Federelements (44) gegen das Ende (46) des Gewindes (28) des Gewindeelements (30) drückbar ist.

2. Bauteil (10) nach Anspruch 1,
**dadurch gekennzeichnet, dass**
die Aufnahme (36) als Vertiefung in einem Wandbereich (24) des Bauteils (10) ausgebildet ist, in welcher die Spannpratze (20) in ihrer Ablagestellung gegenüber einer Außenseite (26) des Wandbereichs (24) zurückspringend angeordnet ist.

3. Bauteil (10) nach Anspruch 1 oder 2,
**dadurch gekennzeichnet, dass**
das Federelement (44) einstückig mit einem Basiselement des Bauteils (10) ausgebildet ist.

4. Bauteil (10) nach einem der vorhergehenden Ansprüche,
**dadurch gekennzeichnet, dass**
das Ende (46) des Gewindes (28) des Gewindeelements (30) ein Führungselement (50) der Führung (48) der Spannpratze (30) überragt.

5. Bauteil (10) nach einem der vorhergehenden Ansprüche,
**dadurch gekennzeichnet, dass**
die Spannpratze (20) zwischen der Ablagestellung und der Zwischenstellung mittels des Gewindeelements (30) um etwa 90° verdrehbar ist.

6. Bauteil (10) nach einem der vorhergehenden Ansprüche,
**dadurch gekennzeichnet, dass**
die Spannpratze (20) ein Führungsmittel (60) aufweist, welches mit einem Führungssteg (52) der Führung (48) formschlüssig zusammenwirkt.

7. Bauteil (10) nach einem der vorhergehenden Ansprüche,
**dadurch gekennzeichnet, dass**
das Bauteil (10) eine Lagereinrichtung aufweist, an welcher das Gewindeelement (30) drehbar gelagert ist.

8. Bauteil (10) nach einem der vorhergehenden Ansprüche,
**dadurch gekennzeichnet, dass**
das Bauteil (10) einer Klappeneinrichtung zugeordnet ist mit einem Basiselement, durch welches wenigstens eine Öffnung (14) begrenzt ist, und mit einer Klappe (16), welche zwischen wenigstens einer zumindest einen Teilbereich der Öffnung (14) überdeckenden und dadurch verschließenden Schließstellung und wenigstens einer den Teilbereich freigebenden Offenstellung relativ zu dem Basiselement bewegbar an dem Basiselement gehalten ist.

9. Fahrzeug, insbesondere Reisemobil oder Wohnwagen, mit wenigstens einem Bauteil (10) nach einem der Ansprüche 1 bis 8.

## Claims

1. Component (10), in particular for a vehicle, comprising, in order to attach the component (10) to a wall region (17) of the vehicle, a clamping device (18) with at least one clamping claw (20) held on a threaded element (30) that is mounted on the component (10), rotatable about an axis of rotation and moveable along the latter into a clamping position, in which the clamping claw (20) engages behind the wall region (17) and attaches the component (10) to the wall region (17), wherein a guide (48) arranged on the component (10) along which the clamping claw (20) can be adjusted between an intermediate position and the clamping position by rotating the threaded element (30), and a receptacle (36) arranged on the component (10) in which the clamping claw (20) arrives by rotating the threaded element (30) in the direction from the clamping position to the intermediate position and beyond out of the guide (48), in that the clamping claw (20) continues to rotate with the threaded element (30) into its rested position due to friction, **characterized in that**
a thread (28) of the threaded element (30) ends at a distance in front of the end of a shaft (40) of the threaded element (30) and the clamping claw (20) 25 can be pressed against the end (46) of the thread (28) of the threaded element (30) by means of a spring element (44).

2. The component (10) of claim 1, **characterized in that** the receptacle (36) is configured as a recess in a wall region (24) of the component (10), in which the clamping claw (20) is arranged in its rested position so as to spring back against an exterior side (26) of the wall region (24).

3. The component (10) of claim 1 or 2,
**characterized in that**
the spring element (44) is formed integrally with a base element of the component (10).

4. The component (10) of any one of the preceding claims,
**characterized in that**
the end (46) of the thread (28) of the threaded element (30) projects beyond a guide element (50) of the guide (48) of the clamping claw (30).

5. The component (10) of any one of the preceding claims,
**characterized in that**
the clamping claw (20) is rotatable by approximately 90° between the rested position and the intermediate position by means of the threaded element (30).

6. The component (10) of any one of the preceding claims,
**characterized in that**
the clamping claw (20) has a guide means (60) which interacts positively with a guide rib (52) of the guide (48).

7. The component (10) of any one of the preceding claims,
**characterized in that**
the component (10) has a bearing device on which the threaded element (30) is rotatably mounted.

8. The component (10) of any one of the preceding claims,
**characterized in that**
the component (10) is assigned to a flap device with a base element by which at least one opening (14) is defined, and with a flap (16) that is held on the base element so as to be movable relative to the base element between at least one closed position covering at least a partial region of the opening (14) and thereby closing it, and at least one open position exposing the partial region.

9. A vehicle, in particular an RV or trailer, with at least one component of any one of the claims 1 to 8.

## Revendications

1. Composant (10), en particulier pour un véhicule, qui comprend un dispositif de serrage (18) pour la fixation du composant (10) sur une zone de paroi (17) du véhicule avec au moins une griffe de serrage (20), laquelle est maintenue sur un élément fileté (30) monté sur le composant (10) et pouvant tourner autour d'un axe de rotation, et qui peut être déplacée le long de celui-ci dans une position de serrage, dans lequel la griffe de serrage (20) s'engage derrière la zone de paroi (17) et fixe le composant (10) sur la zone de paroi (17), dans lequel un guide (48) agencé sur le composant (10) le long duquel la griffe de serrage (20) peut être ajustée entre une position intermédiaire et la position de serrage par rotation de l'élément fileté (30) et un logement (36) agencé sur le composant (10), dans lequel la griffe de serrage (20) sort du guide en faisant tourner l'élément fileté (30) dans le sens allant de la position de serrage à la position intermédiaire et au-delà de celle-ci, la griffe de serrage (20) tournant en outre par frottement avec l'élément fileté (30) jusqu'à atteindre sa position de stockage,
**caractérisé en ce que**
un filetage (28) de l'élément fileté (30) se termine à distance devant l'extrémité d'une tige (40) de l'élément fileté (30) et la griffe de serrage (20) peut être pressée contre l'extrémité (46) du filetage (28) de l'élément fileté (30) au moyen d'un élément ressort (44).

2. Composant (10) selon la revendication 1, **caractérisé en ce que**
le logement (36) est conçu comme un évidement dans une zone de paroi (24) de l'élément (10), dans lequel la griffe de serrage (20) est agencée de manière à s'encastrer dans sa position de stockage par rapport à un côté extérieur (26) de la zone de paroi (24).

3. Composant (10) selon la revendication 1 ou 2, **caractérisé en ce que**
l'élément ressort (44) est formé d'un seul tenant avec un élément de base du composant (10).

4. Composant (10) selon l'une des revendications précédentes, **caractérisé en ce que**
l'extrémité (46) du filetage (28) de l'élément fileté (30) fait saillie d'un élément de guidage (50) du guide (48) de la griffe de serrage (30).

5. Composant (10) selon l'une des revendications précédentes, **caractérisé en ce que**
la griffe de serrage (20) peut être tournée d'environ 90° entre la position de stockage et la position intermédiaire au moyen de l'élément fileté (30).

6. Composant (10) selon l'une des revendications précédentes, **caractérisé en ce que**
la griffe de serrage (20) présente un moyen de guidage (60), lequel coopère par ajustement de forme avec une nervure de guidage (52) du guide (48).

7. Composant (10) selon l'une des revendications précédentes, le composant (10) étant **caractérisé en ce que**
il présente un dispositif de support sur lequel l'élément fileté (30) est monté rotatif.

8. Composant (10) selon l'une des revendications précédentes, le composant (10) étant **caractérisé en ce que**
il est associé à un dispositif à volet comprenant un élément de base à travers lequel au moins une ouverture (14) est délimitée, et comprenant un volet (16), lequel est maintenu sur l'élément de base de manière mobile par rapport à l'élément de base entre au moins une position fermée qui recouvre au moins une zone partielle de l'ouverture (14) et la ferme ainsi, et au moins une position ouverte libérant la zone partielle.

9. Véhicule, en particulier camping-car ou caravane, comprenant au moins un composant (10) selon l'une des revendications 1 à 8.
